(19) **Europäisches Patentamt / European Patent Office / Office européen des brevets**

(11) **EP 4 274 127 A1**

(12) # EUROPEAN PATENT APPLICATION
published in accordance with Art. 153(4) EPC

(43) Date of publication:
**08.11.2023 Bulletin 2023/45**

(21) Application number: **22742246.6**

(22) Date of filing: **21.01.2022**

(51) International Patent Classification (IPC):
*H04L 1/00* (2006.01)

(52) Cooperative Patent Classification (CPC):
**H04L 1/00**

(86) International application number:
**PCT/CN2022/073180**

(87) International publication number:
**WO 2022/156767 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.01.2021 CN 202110099748**
**10.02.2021 CN 202110185631**

(71) Applicant: **Huawei Technologies Co., Ltd.**
**Shenzhen, Guangdong 518129 (CN)**

(72) Inventors:
• **HE, Xiang**
  **Shenzhen, Guangdong 518129 (CN)**
• **REN, Hao**
  **Shenzhen, Guangdong 518129 (CN)**
• **WANG, Xinyuan**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) # DATA TRANSMISSION METHOD AND APPARATUS, AND DEVICE, SYSTEM AND COMPUTER-READABLE STORAGE MEDIUM

(57)  This application discloses a data transmission method, apparatus, device, and system, and a computer-readable storage medium. The data transmission method includes: A first chip obtains first data obtained through coding by using a first FEC code type; determines a second FEC code type based on a reference clock frequency of the first chip and an output rate corresponding to the first FEC code type; codes the first data based on the second FEC code type to obtain second data; and transmits the second data. A third chip receives the second data, and decodes the second data based on the second FEC code type, to obtain decoded data. According to the method, transmitted data can have a higher coding gain, and when the data is transmitted on a channel on which a bit error easily occurs, error correction can be effectively performed on data on which a bit error occurs, thereby improving data transmission quality.

```
First chip                                    Third chip

201: Obtain first data, where the first data is
data obtained through coding by using a first
FEC code type

202: Determine a second FEC code type
based on a reference clock frequency of the
first chip and an output rate corresponding
to the first FEC code type

203: Code the first data based on the second
FEC code type, to obtain second data

                 204: Transmit the second data

                            205: Receive the second data, where the
                            second data is data obtained by coding the first
                            data by using the second FEC code type, and
                            the first data is data obtained through coding
                            by using the first FEC code type

                            206: Decode the second data based on the
                            second FEC code type, to obtain decoded data
```

FIG. 2

## Description

This application claims priority to Chinese Patent Application No. 202110099748.1, filed on January 25, 2021 and entitled "CODING AND DECODING METHOD, DEVICE, AND SYSTEM", which is incorporated herein by reference in its entirety. This application further claims priority to Chinese Patent Application No. 202110185631.5, filed on February 10, 2021 and entitled "DATA TRANSMISSION METHOD, APPARATUS, DEVICE, AND SYSTEM, AND READABLE STORAGE MEDIUM", which is incorporated herein by reference in its entirety.

## TECHNICAL FIELD

Embodiments of this application relate to the field of communication technologies, and in particular, to a data transmission method, apparatus, device, and system, and a computer-readable storage medium.

## BACKGROUND

Forward error correction (forward error correction, FEC) is a data coding method that improves a data transmission rate and transmission distance in a channel by providing a parity bit for transmitted data. In a data transmission process, a transmit end codes original data by using a specific FEC code type, and sends coded data to a receive end. The receive end decodes the received data by using the same FEC code type, to obtain original data.

## SUMMARY

This application provides a data transmission method, apparatus, device, and system, and a computer-readable storage medium, to enhance an FEC code type to adapt to high-rate and/or long-distance data transmission.

According to a first aspect, a data transmission method is provided. The method includes: A first chip obtains first data obtained through coding by using a first FEC code type; determines a second FEC code type based on a reference clock frequency of the first chip and an output rate corresponding to the first FEC code type; then codes the first data based on the second FEC code type, to obtain second data; and transmits the second data.

In the method, the second FEC code type is determined based on the reference clock frequency of the first chip and the output rate corresponding to the first FEC code type, and the obtained first data coded by using the first FEC code type is re-coded by using the second FEC code type, to obtain the second data in concatenated coding. Therefore, the second data has a higher coding gain, and when the data is transmitted on a channel on which a bit error easily occurs, error correction can be effectively performed on data on which a bit error occurs, thereby improving data transmission quality. In addition, because the second data is data obtained by directly coding on the basis of the first data, an implementation process of the method is simple, and data transmission efficiency is improved.

In a possible implementation, the reference clock frequency of the first chip, the output rate corresponding to the first FEC code type, a codeword length of the second data, and an information length in a codeword of the second data meet an overhead proportional relationship. The determining a second FEC code type based on a reference clock frequency of the first chip and an output rate corresponding to the first FEC code type includes: determining the second FEC code type based on the reference clock frequency of the first chip, the output rate corresponding to the first FEC code type, and the overhead proportional relationship. The second FEC code type is determined based on the overhead proportional relationship, so that overheads obtained through coding by using the second FEC code type can be ensured, and data transmission performance is further improved.

In a possible implementation, the overhead proportional relationship includes:

$$\frac{n}{k} \times v_1 = p \times f$$

Herein, n is the codeword length of the second data, k is the information length in the codeword of the second data, vi is the output rate corresponding to the first FEC code type, p is an adjustment parameter, f is the reference clock frequency of the first chip, and p is a positive integer.

In a possible implementation, the codeword length of the second data is in an integer multiple relationship with a quantity of logical channels through which the second data is distributed. When the second FEC code type is determined, the integer multiple relationship is considered, so that the determined second FEC code type is more suitable for a transmission scenario, and data transmission performance is improved.

In a possible implementation, that the first chip codes the first data based on the second FEC code type, to obtain second data includes: The first chip distributes the first data to obtain a plurality of pieces of first subdata, and the first chip separately codes the plurality of pieces of first subdata based on the second FEC code type to obtain a plurality of pieces of second subdata. That the first chip transmits the second data includes: The first chip transmits the plurality of pieces of second subdata.

In a possible implementation, that the first chip distributes the first data to obtain a plurality of pieces of first subdata includes: The first chip distributes the first data through a physical coding sublayer PCS channel to obtain the plurality of pieces of first subdata; or the first chip distributes the first data stream through a physical medium attachment sublayer PMA to obtain the plurality of pieces of first subdata.

In a possible implementation, that the first chip transmits the second data includes: The first chip distributes the second data, to obtain a plurality of pieces of third subdata, and sends the plurality of pieces of third subdata through a plurality of logical channels.

In a possible implementation, before the determining a second FEC code type based on a reference clock frequency of the first chip and an output rate corresponding to the first FEC code type, the method further includes: The first chip performs auto-negotiation with a third chip that receives data sent by the first chip; and in response to an auto-negotiation result indicating that concatenated coding is required, the first chip performs the step of determining a second FEC code type based on a reference clock frequency of the first chip and an output rate corresponding to the first FEC code type. Auto-negotiation is used to determine whether to perform concatenated coding, which is more applicable and more suitable for an actual scenario requirement.

In a possible implementation, the first data is data inside the first chip, or the first data is data that is received by the first chip and that is sent by a second chip. Because the first data may be the data inside the first chip, or may be received data transmitted by another chip, a data transmission scenario to which the method is applied is flexible.

According to a second aspect, a data transmission method is provided. The method includes: A third chip receives second data, where the second data is data obtained by coding first data by using a second forward error correction FEC code type, and the first data is data obtained through coding by using a first FEC code type. The third chip decodes the second data based on the second FEC code type, to obtain decoded data. The second data is obtained by coding the first data by using the second FEC code type, and the first data is obtained through coding by using the first FEC code type. Therefore, the second data received by the third chip has a higher coding gain and a higher error correction capability. The obtained decoded data has higher accuracy by decoding the second data.

In a possible implementation, that the third chip decodes the second data based on the second FEC code type includes: The third chip performs soft-decision decoding on the second data based on the second FEC code type.

In a possible implementation, after the third chip decodes the second data based on the second FEC code type, to obtain decoded data, the method further includes: The third chip re-codes the decoded data based on a third FEC code type, and transmits the re-coded data. Data transmission quality of a next link can be protected by re-coding the decoded data based on the third FEC code type.

In a possible implementation, the third FEC code type is the second FEC code type.

According to a third aspect, a data transmission apparatus is provided. The apparatus includes:

an obtaining module, configured to obtain first data, where the first data is data obtained through coding by using a first forward error correction FEC code type;
a determining module, configured to determine a second FEC code type based on a reference clock frequency of a first chip and an output rate corresponding to the first FEC code type;
a coding module, configured to code the first data based on the second FEC code type, to obtain second data; and
a transmission module, configured to transmit the second data.

In a possible implementation, the reference clock frequency of the first chip, the output rate corresponding to the first FEC code type, a codeword length of the second data, and an information length in a codeword of the second data meet an overhead proportional relationship. The determining module is configured to determine the second FEC code type based on the reference clock frequency of the first chip, the output rate corresponding to the first FEC code type, and the overhead proportional relationship.

In a possible implementation, the overhead proportional relationship includes:

$$\frac{n}{k} \times v_1 = p \times f$$

Herein, n is the codeword length of the second data, k is the information length in the codeword of the second data, vi is the output rate corresponding to the first FEC code type, p is an adjustment parameter, f is the reference clock frequency of the first chip, and p is a positive integer.

In a possible implementation, the codeword length of the second data is in an integer multiple relationship with a quantity of logical channels through which the second data is distributed.

In a possible implementation, the coding module is configured to: distribute the first data to obtain a plurality of pieces of first subdata, and separately code the plurality of pieces of first subdata based on the second FEC code type to obtain a plurality of pieces of second subdata. The transmission module is configured to transmit the plurality of pieces of second subdata.

In a possible implementation, the coding module is configured to distribute the first data through a physical coding sublayer PCS channel to obtain the plurality of pieces of first subdata; or distribute the first data stream through a physical medium attachment sublayer PMA to obtain the plurality of pieces of first subdata.

In a possible implementation, the transmission module is configured to: distribute the second data to obtain a plurality of pieces of third subdata, and send the plurality of pieces of third subdata through a plurality of logical channels.

In a possible implementation, the apparatus further includes an auto-negotiation module, configured to perform auto-negotiation with a third chip that receives data sent by the first chip, where in response to an auto-negotiation result indicating that concatenated coding is required, the determining module determines the second FEC code type based on the reference clock frequency of the first chip and the output rate corresponding to the first FEC code type.

In a possible implementation, the first data is data inside the first chip, or the first data is data that is received by the first chip and that is sent by a second chip.

According to a fourth aspect, a data transmission apparatus is provided. The apparatus includes:

a receiving module, configured to receive second data, where the second data is data obtained by coding first data by using a second forward error correction FEC code type, and the first data is data obtained through coding by using a first FEC code type; and

a decoding module, configured to decode the second data based on the second FEC code type, to obtain decoded data.

In a possible implementation, the decoding module is configured to perform soft-decision decoding on the second data based on the second FEC code type, to obtain the decoded data.

In a possible implementation, the apparatus further includes a coding module, configured to re-code the decoded data based on a third FEC code type; and a transmission module, configured to transmit the re-coded data.

In a possible implementation, the third FEC code type is the second FEC code type.

According to a fifth aspect, a data transmission device is provided. The device includes a processor, where the processor is coupled to a memory, the memory stores at least one program instruction or code, and the at least one program instruction or code is loaded and executed by the processor, so that the device implements the data transmission method according to the first aspect or the second aspect.

According to a sixth aspect, a data transmission system is provided. The system includes: a first data transmission device, configured to perform the method according to any one of the first aspect or the possible implementations of the first aspect, and a second data transmission device, configured to perform the method according to any one of the second aspect or the possible implementations of the second aspect.

According to a seventh aspect, a computer-readable storage medium is provided. The computer-readable storage medium stores at least one program instruction or code, and when the program instruction or code is loaded and executed by a processor, a computer is enabled to implement the data transmission method according to the first aspect or the second aspect.

Another communication apparatus is provided. The apparatus includes a communication interface, a memory, and a processor. The memory and the processor communicate with each other by using an internal connection path. The memory is configured to store instructions. The processor is configured to execute the instructions stored in the memory, to control the communication interface to receive data and control the communication interface to send the data. When the processor executes the instructions stored in the memory, the processor is enabled to perform the method in any one of the first aspect or the possible implementations of the first aspect, or perform the method in any one of the second aspect or the possible implementations of the second aspect. In an example embodiment, there are one or more processors, and there are one or more memories. In an example embodiment, the memory may be integrated with the processor, or the memory is disposed independently of the processor.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

A computer program (product) is provided. The computer program (product) includes computer program code. When the computer program code is run on a computer, the computer is enabled to perform the methods according to the foregoing aspects.

A chip is provided. The chip includes a processor, configured to: invoke, from a memory, instructions stored in the memory and run the instructions, so that a device on which the chip is installed performs the methods in the foregoing aspects.

Another chip is provided. The chip includes: an input interface, an output interface, a processor, and a memory. The input interface, the output interface, the processor, and the memory are connected to each other by using an internal connection path. The processor is configured to execute code in the memory. When the code is executed, the processor is configured to perform the methods in the foregoing aspects.

A device is provided, and includes the chip in any one of the foregoing solutions.

A device is provided, and includes the first chip in any one of the foregoing solutions and/or the third chip in any one of the foregoing solutions.

In the foregoing embodiment, during soft decoding, first, calculating confidence (also referred to as reliability, reliability) of each bit in a received codeword based on received quantized soft-decision information, to obtain a confidence sequence; selecting M least reliable bit locations from the confidence sequence, and in the M least reliable bit locations, and successively attempting to perform bitwise inversion on all combinations of 0, 1, 2, ..., and N (N < M) bit locations to obtain a plurality of test codewords; performing hard-decision decoding error correction on each test codeword; then calculating Euclidean distances between the confidence sequence and all corrected test codewords; and selecting a corrected test codeword corresponding to a smallest distance as a final corrected codeword output. If there is no correctable codeword in the test codewords, a hard-decision result corresponding to the original received codeword is used as an output codeword.

**BRIEF DESCRIPTION OF DRAWINGS**

FIG. 1 is a schematic diagram of an implementation scenario of a data transmission method according to an embodiment of this application;

FIG. 2 is a flowchart of a data transmission method according to an embodiment of this application;

FIG. 3 is a schematic diagram of coding first data based on a second FEC code type according to an embodiment of this application;

FIG. 4 is a schematic diagram of distributing first data according to an embodiment of this application;

FIG. 5 is a schematic diagram of distributing first data through a PCS channel according to an embodiment of this application;

FIG. 6 is a schematic diagram of distributing second data according to an embodiment of this application;

FIG. 7 is another schematic diagram of distributing second data according to an embodiment of this application;

FIG. 8 is a schematic diagram of another implementation scenario of a data transmission method according to an embodiment of this application;

FIG. 9 is a schematic diagram of a structure of a data transmission apparatus according to an embodiment of this application;

FIG. 10 is a schematic diagram of a structure of another data transmission apparatus according to an embodiment of this application; and

FIG. 11 is a schematic diagram of a structure of a data transmission device according to an embodiment of this application.

**DESCRIPTION OF EMBODIMENTS**

Terms used in an implementation part of this application are merely used to explain embodiments of this application, and are not intended to limit this application. The following describes embodiments of the present invention with reference to accompanying drawings.

In the field of communication technologies, coding data by using FEC is an important technical means for reducing a bit error rate in a data transmission process and further improving data transmission quality. In scenarios where a link rate is improved and a channel is more challenging, FEC with a higher coding gain may be required. For example, for an Ethernet interface of 800 gigabit Ethernet (gigabit Ethernet, GE)/1.6 terabit Ethernet (terabit Ethernet, TE), or a 200G fourth generation pulse amplitude modulation (4 pulse amplitude modulation, PAM 4) optical link, transmission at a higher rate usually has stricter requirements on channels and bit error rates, and after a pre-correction bit error rate improves, stronger FEC can keep a bit error rate after correction lower. In this regard, embodiments of this application provide a data transmission method. In the method, a second FEC code type is determined based on a reference clock frequency (reference clock frequency) of a first chip for transmitting data and an output rate corresponding to a first FEC code type, and obtained first data coded by using the first FEC code type is re-coded by using the second FEC code type, to obtain second data in concatenated coding. Therefore, the second data has a higher coding gain, and when the data is transmitted on a channel on which a bit error easily occurs, error correction can be effectively performed on data on which a bit error occurs, thereby improving data transmission quality. In addition, because the second data is data obtained by directly coding on the basis of the first data, an implementation process of the method is simple, and data transmission efficiency is improved. In addition, a process of concatenated coding may be performed under a specific trigger condition. For example, in this method, chips perform auto-negotiation, and perform, based on an auto-negotiation result indicating that concatenated coding is required, a process of determining the second FEC code type based on the reference clock frequency of the first chip and the output rate corresponding to the first FEC code type, so that the chips can actively determine whether concatenated coding needs to be performed. This is more flexible for coding data transmitted in different channels.

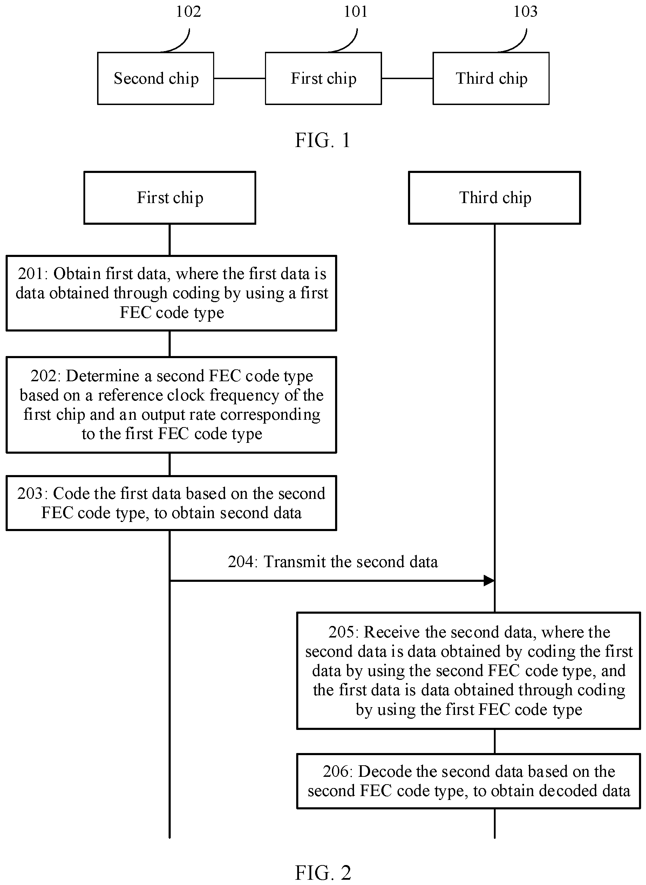

The method in embodiments of this application is applicable to a current Ethernet interface or another scenario in which data needs to be transmitted. An implementation scenario shown in FIG. 1 is used as an example. The implementation scenario includes a plurality of chips, and the chips can exchange information to implement data transmission. As shown in FIG. 1, data transmission may be performed between a first chip 101 and a second chip 102, and between the first chip 101 and a third chip 103. It should be noted that the implementation scenario shown in FIG. 1 may include N chips, where N is a positive integer greater than or equal to 2. In FIG. 1, only three chips are used as an example for description.

With reference to the implementation scenario shown in FIG. 1, the data transmission method provided in embodiments of this application is shown in FIG. 2, and includes but is not limited to step 201 to step 206.

Step 201: A first chip obtains first data, where the first data is data obtained through coding by using a first FEC code type.

In a possible implementation, the first data is data inside the first chip, or the first data is data that is received by the first chip and that is sent by a second chip. For example, the first chip codes original data by using the first FEC code type to obtain the first data, or the second chip codes original data by using the first FEC code type to obtain coded data. The second chip scrambles the coded data to form the first data, and the first chip receives the first data sent by the second chip. For example, the second chip sends the first data to the first chip through a physical channel. Regardless of whether the first data is the data inside the first chip or the data sent by the second chip, in addition to coding by using the first FEC, other processing may be performed on the first data. For example, the first data is data sent by the second chip to the first chip by using a physical medium attachment sublayer (physical medium attachment sublayer, PMA) and/or a physical medium dependent (physical media dependent, PMD) interface; or the first data may be data passing through the PMA and/or a physical coding sublayer (physical coding sublayer, PCS) in the first chip. In addition, the first data may alternatively be data on which another processing is performed. For example, the first data is data obtained after interleaving and distributing are performed.

The first FEC code type is not limited in this embodiment of this application. In a possible implementation, the first FEC code type is any one of a Reed-Solomon (Reed-Solomon, RS) code, a Bose-Chaudhuri-Hocquenghem (Bose-Chaudhuri-Hocquenghem, BCH) code, a fire (fire) code, a turbo (turbo) code, a turbo product code (turbo product code, TPC), a staircase (staircase) code, and a low-density parity-check (low-density parity-check, LDPC) code.

In addition, after receiving the first data, the first chip may directly transmit the first data. To improve data transmission quality, the first data may alternatively be re-coded. A triggering manner of performing concatenated coding by the first chip is not limited in this embodiment of this application. In a possible implementation, the first chip performs auto-negotiation with a third chip that receives data sent by the first chip; and in response to an auto-negotiation result indicating that concatenated coding is required, the first chip determines the second FEC code type based on the reference clock frequency of the first chip and the output rate corresponding to the first FEC code type. The auto-negotiation process may be performed after the first data is received, or may be performed before the method is performed. An occasion of auto-negotiation is not limited in this embodiment of this application, and auto-negotiation only needs to be performed before the first data is transmitted.

Step 202: Determine the second FEC code type based on the reference clock frequency of the first chip and the output rate corresponding to the first FEC code type.

In a possible implementation, the reference clock frequency of the first chip, the output rate corresponding to the first FEC code type, a codeword length of the second data, and an information length in a codeword of the second data meet an overhead proportional relationship. Determining the second FEC code type based on the reference clock frequency of the first chip and the output rate corresponding to the first FEC code type includes: determining the second FEC code type based on the reference clock frequency of the first chip, the output rate corresponding to the first FEC code type, and the overhead proportional relationship. The second FEC code type is determined based on the overhead proportional relationship, so that overheads obtained through coding by using the second FEC code type can be ensured, and data transmission performance is further improved.

In a possible implementation, the overhead proportional relationship includes:

$$\frac{n}{k} \times v_1 = p \times f \qquad \text{Formula (1)}$$

Here, n is the codeword length of the second data, k is the information length in the codeword of the second data, $v_1$ is the output rate corresponding to the first FEC code type, p is an adjustment parameter, f is the reference clock frequency of the first chip, and p is a positive integer.

It should be noted that there are different combinations of n, k, and p, provided that the foregoing overhead proportion relationship can be met. For example, the adjustment parameter is a reference value, for example, the adjustment parameter is an integer multiple of 10 or an integer multiple of 20. Based on the reference value, a second FEC code type that meets the overhead proportional relationship is determined.

For example, the first FEC code type is RS (544, 514), the reference clock frequency of the first chip is 156.25 megahertz (MHz), and the output rate corresponding to the first FEC code type is 106.25 gigabits per second (Gbps). For example, when p = 705, n = 282, and k = 272. When p = 720, n = 144, k = 136, or n = 180, k = 170. For another example, if the adjustment parameter is 720, n = 144 and k = 136, or n = 180 and k = 170.

In a possible implementation, when the second FEC code type is determined based on the overhead proportional relationship, the second FEC code type may be determined with reference to Table 1, where all code types in Table 1 are BCH codes.

**Table 1**

| Quantity of extended bits included in n | n | k | m | t |
|---|---|---|---|---|
| 0 | 180 | 170 | 10 | 1 |
| | 162 | 153 | 9 | 1 |
| | 144 | 136 | 8 | 1 |
| | 126 | 119 | 7 | 1 |
| 1 | 198 | 187 | 10 | 1 |
| | 180 | 170 | 9 | 1 |
| | 162 | 153 | 8 | 1 |
| 2 | 216 | 204 | 10 | 1 |
| | 198 | 187 | 9 | 1 |
| | 180 | 170 | 8 | 1 |

In Table 1, n is a codeword length, k is an information length in a codeword, m indicates that a finite field (finite field) or Galois field (Galois Field) in which the code is located is GF ($2^m$), and t is an error correction capability. For example, BCH (180, 170, m = 10, t = 1) indicates that a codeword length of the BCH code type is 180 bits (bit), the length includes 0 extended bits (extended bit), the information length in the codeword is 170 bits, m = 10, and the error correction capability is 1. eBCH (161 + 1, 153, m = 8, t = 1) indicates that the BCH code type is a BCH code type including an extended bit, the codeword length is 162 bits, the length includes one extended bit, m = 8, and the error correction capability is 1. A principle of another BCH code type in Table 1 is the same as that of the foregoing BCH code type. Details are not described herein again.

In a possible implementation, the codeword length of the second data is in an integer multiple relationship with a quantity of logical channels through which the second data is distributed. The logical channel may be a PCS channel or an FEC channel. When the second FEC code type is determined, the integer multiple relationship is considered, so that the determined second FEC code type is more suitable for a transmission scenario, and data transmission performance is improved. For example, when the quantity of logical channels through which the second data is distributed is 8, the codeword length of the second data is an integer multiple of 8. Certainly, the quantity of logical channels may alternatively be 1, that is, the second data is transmitted through one logical channel. Because the codeword length of the second data is a positive integer, the codeword length of the second data is also in an integer multiple relationship with the quantity of logical channels through which the second data is distributed.

A manner of determining the second FEC code type based on the reference clock frequency of the first chip and the output rate corresponding to the first FEC code type includes but is not limited to the following three manners.

Manner 1: The first chip first determines a first set based on the reference clock frequency of the first chip, the output rate corresponding to the first FEC code type, and the overhead proportional relationship, where the first set includes a plurality of FEC code types that meet the overhead proportional relationship. Then, the second FEC code type is determined from the first set based on an integer multiple relationship between the codeword length and the logical channel during distribution.

Manner 2: The first chip first determines a second set based on an integer multiple relationship between a codeword length and a logical channel during distribution, where the second set includes a plurality of FEC code types that meet the integer multiple relationship. Then, the second FEC code type is determined from the second set based on the reference clock frequency of the first chip and the output rate corresponding to the first FEC code type based on the overhead proportional relationship.

Manner 3: The first chip first determines a first set based on the reference clock frequency of the first chip, the output rate corresponding to the first FEC code type, and the overhead proportion relationship, where the first set includes a plurality of FEC code types that meet the overhead proportion relationship. Then, a second set is determined based on an integer multiple relationship between a codeword length and a logical channel during distribution, where the second set includes a plurality of FEC code types that meet the integer multiple relationship, and the second FEC code type is determined based on the first set and the second set. For example, the first chip determines the second FEC code type based on an intersection of the first set and the second set.

It should be noted that the second FEC code type may be any one of the RS code, the BCH code, the fire code, the turbo code, the turbo product code, the staircase code, or the LDPC code. A type of the second FEC code type is not limited in this embodiment of this application.

Step 203: The first chip codes the first data based on the second FEC code type, to obtain the second data.

In a possible implementation, if the first data is the data inside the first chip, the first chip codes the first data based on the second FEC code type, to obtain the second data. If the first data is the data that is received by the first chip and that is sent by the second chip, the first chip may directly code the data based on the second FEC code type, to obtain the second data. It should be noted that the first chip may perform a simple operation other than decoding on the received data, for example, bit multiplexing (bit mux) or bit demultiplexing (bit demux).

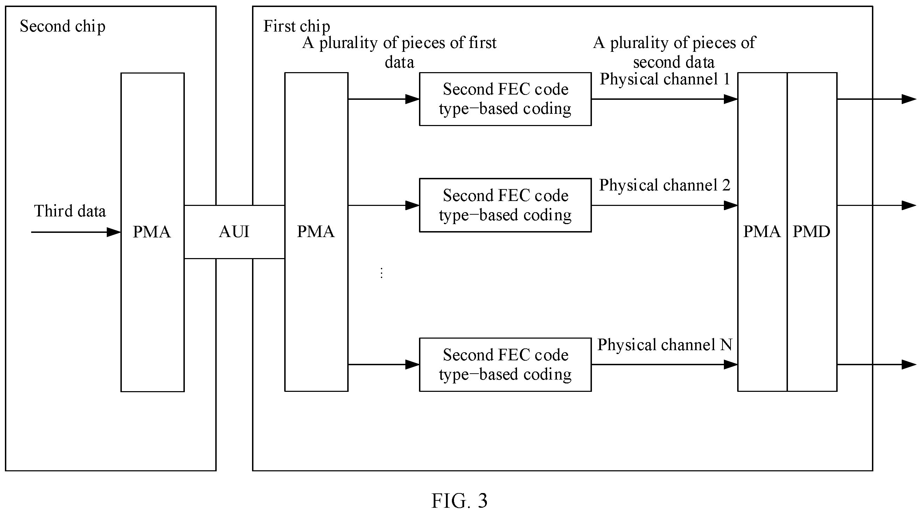

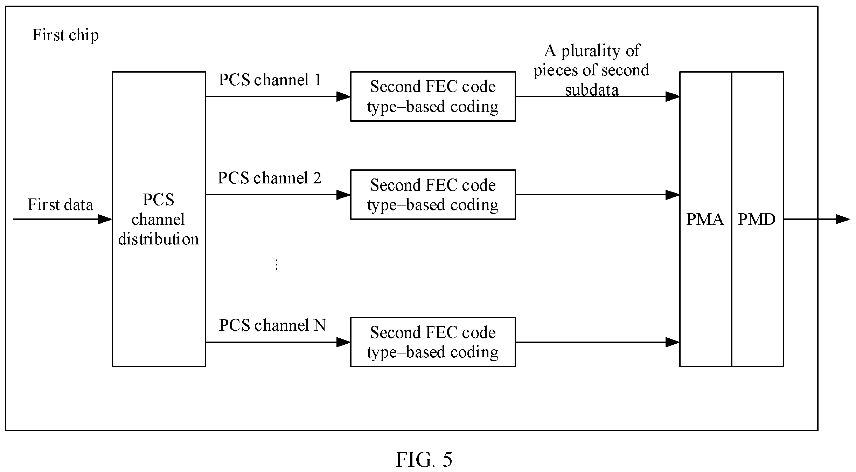

For example, if the first data is a single piece of data, the first chip codes the first data based on the second FEC code type, to obtain the second data, where the first data may be data directly received by the first chip, or data obtained by interleaving a plurality of pieces of subdata distributed by the first chip. In this case, the first data is considered as a whole, and the first data is coded by using the second FEC code type. Optionally, if there are a plurality of pieces of first data, for example, a plurality of pieces of first data sent by the second chip, the first chip separately codes each piece of first data based on the second FEC code type, to obtain a plurality of pieces of second data. As shown in FIG. 3, the first chip receives third data through an attachment unit interface (attachment unit interface, AUI), and processes the third data by using a physical medium attachment sublayer (physical medium attachment sublayer, PMA), to obtain a plurality of pieces of first data. The first chip separately codes the plurality of pieces of first data, to obtain a plurality of pieces of second data. The obtained plurality of pieces of second data may be transmitted through a plurality of physical channels (physical channels 1 to N in FIG. 5), and then transmitted outwards by using the PMA, a physical media dependent (physical media dependent, PMD), or the like. In some embodiments, in FIG. 3, the second chip may be a physical layer (PHY) chip in a network device, for example, a router or a switch, and the first chip may be a chip in an optical module, or a clock data recovery (clock data recovery, CDR)/retimer (retimer) chip. The PHY chip may be a chip located on a board of the network device. The chip may be a central processing unit (central processing unit, CPU), a network processor (network processor, NP), a neural network processing unit (neural network processing unit, NPU), a field programmable gate array (field programmable gate array, FPGA), a programmable logic controller (programmable logic controller, PLC), or the like, or any combination thereof.

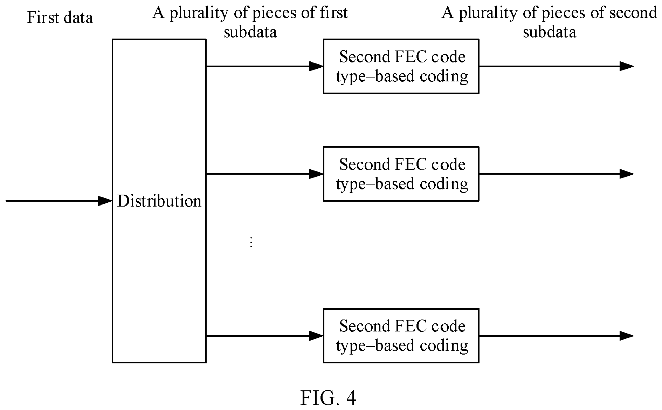

In a possible implementation, regardless of one piece of first data or a plurality of pieces of first data, that the first chip codes the first data based on the second FEC code type, to obtain second data includes: The first chip distributes the first data to obtain a plurality of pieces of first subdata, and the first chip separately codes the plurality of pieces of first subdata based on the second FEC code type to obtain a plurality of pieces of second subdata. For example, the process may be shown in FIG. 4.

For example, a manner in which the first chip distributes the first data to obtain the plurality of pieces of first subdata includes but is not limited to the following two manners.

Manner 1: The first chip distributes the first data through the logical channel to obtain the plurality of pieces of first subdata.

For example, the first chip distributes the first data through N logical channels to obtain the plurality of pieces of first subdata, where each logical channel is used to transmit one piece of first subdata, and the logical channel may be the PCS channel or the FEC channel. The first chip separately codes the plurality of pieces of first subdata based on the second FEC code type, to obtain the plurality of pieces of second subdata. For example, the process may be shown in FIG. 5. The obtained plurality of pieces of second subdata may be separately transmitted to the outside by using the PMA, the PMD, or the like.

Manner 2: The first chip distributes the first data through the PMA to obtain the plurality of pieces of first subdata.

Step 204: The first chip transmits the second data.

The first chip transmits the second data through the logical channel, and the logical channel may be the PCS channel or the FEC channel. In a possible implementation, for a quantity of data transmission channels, that the first chip transmits the second data includes but is not limited to the following two cases.

Case 1: A quantity of channels is 1.

In case 1, the first chip transmits the second data through the channel, and the second data may be a single piece of data, or include a plurality of pieces of second subdata.

Case 2: A quantity of channels is a positive integer greater than or equal to 2.

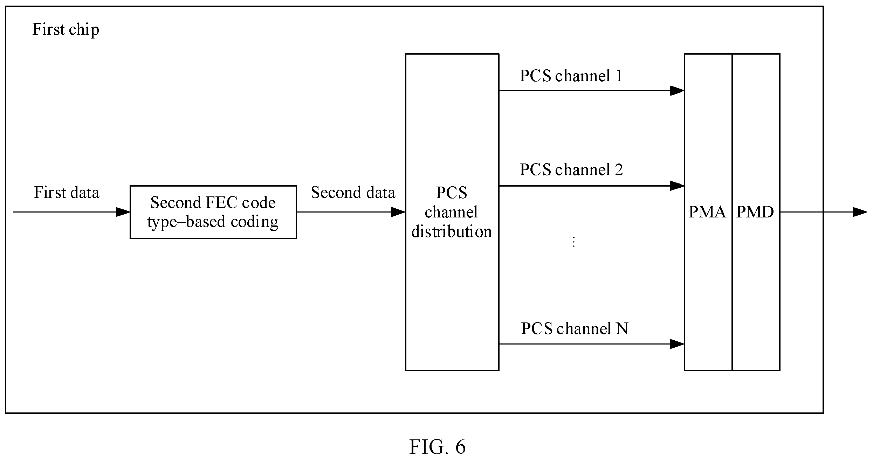

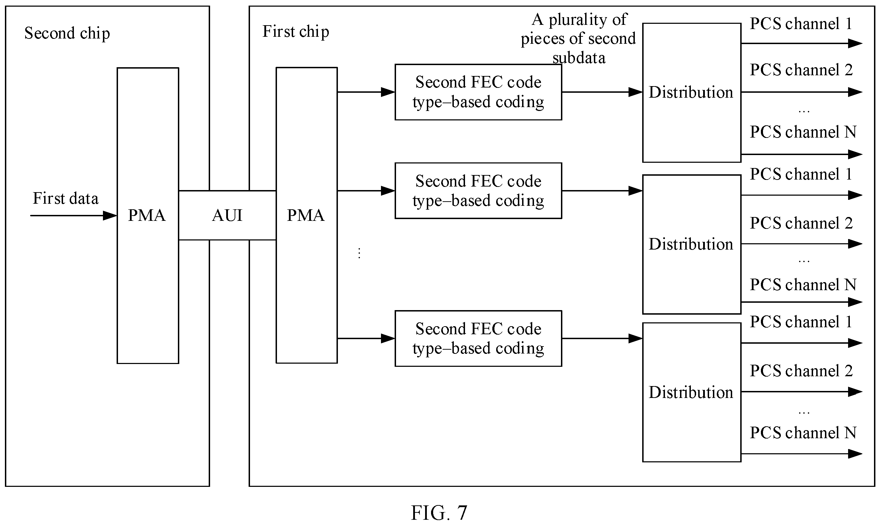

In case 2, the first chip distributes the second data to obtain a plurality of pieces of third subdata, and sends the plurality of pieces of third subdata through a plurality of logical channels. For example, the first chip distributes the second data in round-robin distribution. For example, as shown in FIG. 6, there are N logical channels, and N is a positive integer greater than or equal to 2. The first chip distributes the second data in round-robin distribution to obtain N pieces of third subdata, and sends the N pieces of third subdata through the N logical channels. For example, each of the N logical channels correspondingly sends one piece of third subdata. The N pieces of third subdata include but are not limited to being sent to a next chip through the PMA and the PMD. For example, if the first data is a single piece of data, after coding the single piece of first data by using the second FEC code type to obtain the second data, the first chip distributes the second data to obtain a plurality of pieces of third subdata, and sends the plurality of pieces of third subdata through a plurality of logical channels. If the first data is distributed as a plurality of pieces of first subdata, any one of the plurality of pieces of first subdata is coded by using the second FEC code type to obtain the second subdata, the first chip distributes the plurality of pieces of second subdata to obtain a plurality of pieces of third subdata, and sends the plurality of pieces of third subdata through a plurality of logical channels. For example, the first chip distributes any one of the plurality of pieces of second subdata in round-robin distribution. Taking the system shown in FIG. 7 as an example, the plurality of pieces of second subdata are obtained through coding by using the second FEC code type. For each piece of second subdata, the first chip distributes the second subdata to obtain N pieces of third subdata, where N is a positive integer greater than or equal to 2, and the plurality of pieces of third subdata are distributed through the N logical channels. For example, each of the N logical channels correspondingly sends one piece of third subdata.

The foregoing step 201 to step 204 are all processes in which the first chip side performs data transmission. The following uses a third chip side as an example to describe the data transmission method.

Step 205: The third chip receives second data, where the second data is the data obtained by coding the first data by using the second FEC code type, and the first data is the data obtained through coding by using the first FEC code type.

In a possible implementation, the third chip receives, through the logical channel, the second data sent by the first chip.

Step 206: The third chip decodes the second data based on the second FEC code type, to obtain decoded data.

The second data is obtained by coding the first data by using the second FEC code type, and the first data is obtained through coding by using the first FEC code type. Therefore, the second data received by the third chip has a higher coding gain and a higher error correction capability. The obtained decoded data has higher accuracy by decoding the second data.

In a possible implementation, the third chip performs auto-negotiation with the first chip that sends the second data. In response to an auto-negotiation result indicating that decoding needs to be performed, the third chip decodes the second data based on the second FEC code type, to obtain the decoded data.

That the third chip decodes the second data based on the second FEC code type includes but is not limited to: The third chip performs soft-decision decoding on the second data based on the second FEC code type. For example, that the third chip performs soft-decision decoding on the second data based on the second FEC code type, to obtain the decoded data includes: The third chip obtains a first sequence of the second FEC code type based on the second data, where the first sequence includes a plurality of symbol elements. The third chip separately allocates a reliability metric to each of the plurality of symbol elements; the third chip determines at least one most unreliable location based on the reliability metric; and the third chip obtains an error pattern based on the at least one most unreliable location, and corrects the first sequence based on the error pattern. The third chip performs algebraic decoding on the corrected first sequence to obtain a first codeword set, maps codewords in the first codeword set, and the third chip obtains the decoded data based on a mapping result.

In a possible implementation, after the third chip decodes the second data based on the second FEC code type, to obtain the decoded data, the method further includes: The third chip re-codes the decoded data based on a third FEC code type, and transmits the re-coded data. Data transmission quality of a next link can be protected by re-coding the decoded data based on the third FEC code type. The third FEC code type is not limited in this embodiment of this application. For example, the third FEC code type is a second FEC code type, and the second FEC code type may be the same as the second FEC code type for coding the second data, or may be another second FEC code type that meets the foregoing overhead proportion relationship and a relationship in which a codeword length is an integer multiple of a quantity of logical channels during distribution.

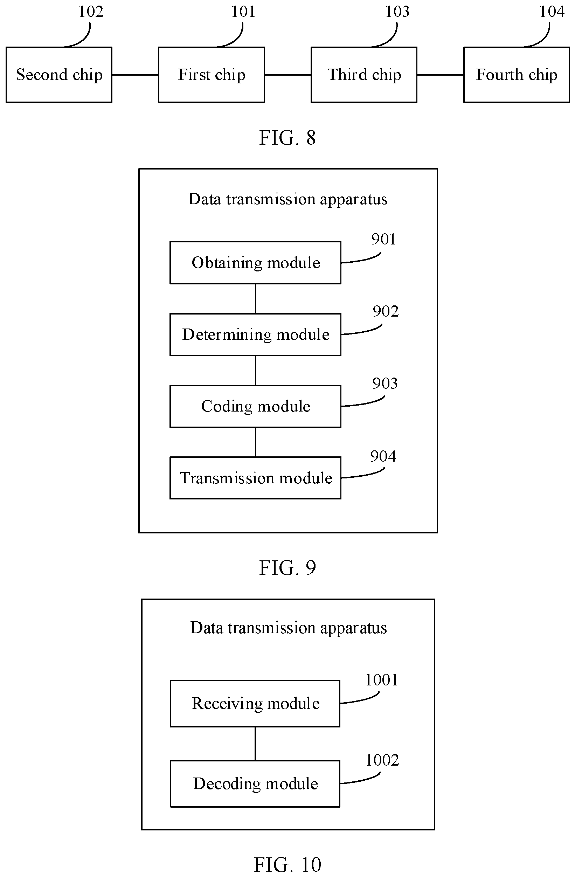

For example, as shown in FIG. 8, after the third chip decodes the second data based on the second FEC code type to obtain the decoded data, the third chip needs to transmit the decoded data to a fourth chip, and the fourth chip may process the received data as a processing manner of the first chip. For example, the decoded data is re-coded according to the foregoing processes of step 202 to step 204, and the re-coded data is transmitted. Optionally, the fourth chip may alternatively decode the received data based on the first FEC code type, to obtain service data.

According to the method provided in this embodiment of this application, the second FEC code type is determined based on the reference clock frequency of the first chip and the output rate corresponding to the first FEC code type, and the obtained first data coded by using the first FEC code type is re-coded by using the second FEC code type, to obtain the second data in concatenated coding. Therefore, the second data has a higher coding gain, and when the data is transmitted on a channel on which a bit error easily occurs, error correction can be effectively performed on data on which a bit error occurs, thereby improving data transmission quality.

In addition, because the second data is data obtained by directly coding on the basis of the first data, an implementation process of the method is simple, and data transmission efficiency is improved.

In addition, in the method, chips perform auto-negotiation, and perform, based on an auto-negotiation result indicating that concatenated coding is required, a process of determining the second FEC code type based on the reference clock frequency of the first chip and the output rate corresponding to the first FEC code type, so that the chips can actively determine whether concatenated coding needs to be performed. This is more flexible for coding data transmitted in different channels.

An embodiment of this application further provides a data transmission apparatus. FIG. 9 is a schematic diagram of a structure of a data transmission apparatus according to an embodiment of this application. Based on the following plurality of modules shown in FIG. 9, the data transmission apparatus shown in FIG. 9 can perform all or some operations performed by a first chip. It should be understood that the apparatus may include more additional modules than the shown modules or omit some of the shown modules. This is not limited in embodiments of this application. As shown in FIG. 9, the apparatus includes:

an obtaining module 901, configured to obtain first data, where the first data is data obtained through coding by using a first FEC code type;
a determining module 902, configured to determine a second FEC code type based on a reference clock frequency of the first chip and an output rate corresponding to the first FEC code type;
a coding module 903, configured to code the first data based on the second FEC code type, to obtain second data; and
a transmission module 904, configured to transmit the second data.

In a possible implementation, the reference clock frequency of the first chip, the output rate corresponding to the first FEC code type, a codeword length of the second data, and an information length in a codeword of the second data meet an overhead proportional relationship. The determining module 902 is configured to determine the second FEC code type based on the reference clock frequency of the first chip, the output rate corresponding to the first FEC code type, and the overhead proportional relationship.

In a possible implementation, the overhead proportional relationship includes:

$$\frac{n}{k} \times v_1 = p \times f$$

Herein, n is the codeword length of the second data, k is the information length in the codeword of the second data, vi is the output rate corresponding to the first FEC code type, p is an adjustment parameter, f is the reference clock frequency of the first chip, and p is a positive integer.

In a possible implementation, the codeword length of the second data is in an integer multiple relationship with a quantity of logical channels through which the second data is distributed.

In a possible implementation, the coding module 903 is configured to: distribute the first data to obtain a plurality of pieces of first subdata, and separately code the plurality of pieces of first subdata based on the second FEC code type to obtain a plurality of pieces of second subdata. The transmission module 904 is configured to transmit the plurality of pieces of second subdata.

In a possible implementation, the coding module 903 is configured to distribute the first data through a PCS channel to obtain the plurality of pieces of first subdata; or distribute the first data stream through a PMA to obtain the plurality of pieces of first subdata.

In a possible implementation, the transmission module 904 is configured to: distribute the second data to obtain a plurality of pieces of third subdata, and send the plurality of pieces of third subdata through a plurality of logical channels.

In a possible implementation, the apparatus further includes an auto-negotiation module, configured to perform auto-negotiation with a third chip that receives data sent by the first chip, where in response to an auto-negotiation result indicating that concatenated coding is required, the determining module 902 performs the step of determining a second FEC code type based on a reference clock frequency of the first chip and an output rate corresponding to the first FEC code type.

In a possible implementation, the first data is data inside the first chip, or the first data is data that is received by the first chip and that is sent by a second chip.

FIG. 10 is a schematic diagram of a structure of a data transmission apparatus according to an embodiment of this application. Based on the following plurality of modules shown in FIG. 10, the data transmission apparatus shown in FIG. 10 can perform all or some operations performed by a third chip. It should be understood that the apparatus may include more additional modules than the shown modules or omit some of the shown modules. This is not limited in embodiments of this application. As shown in FIG. 10, the apparatus includes:

> a receiving module 1001, configured to receive second data, where the second data is data obtained by coding first data by using a second FEC code type, and the first data is data obtained through coding by using a first FEC code type; and
> a decoding module 1002, configured to decode the second data based on the second FEC code type, to obtain decoded data.

In a possible implementation, the decoding module 1002 is configured to perform soft-decision decoding on the second data based on the second FEC code type, to obtain the decoded data.

In a possible implementation, the apparatus further includes a coding module, configured to re-code the decoded data based on a third FEC code type; and a transmission module, configured to transmit the re-coded data.

In a possible implementation, the third FEC code type is the first FEC code type or the second FEC code type.

It should be understood that, when the apparatuses provided in FIG. 9 and FIG. 10 implement functions of the apparatuses, division into the foregoing functional modules is only used as an example for description. In actual application, the foregoing functions may be allocated to different functional modules for implementation based on a requirement. In other words, an inner structure of a device is divided into different functional modules, to implement all or some of the functions described above. In addition, the apparatuses provided in the foregoing embodiment and the method embodiments pertain to the same concept. For a specific implementation process of the apparatus, refer to the method embodiments. Details are not described herein again.

An embodiment of this application provides a data transmission device. The device includes a processor, where the processor is coupled to a memory, the memory stores at least one program instruction or code, and the at least one program instruction or code is loaded and executed by the processor, so that the data transmission device implements the method in the foregoing method embodiment.

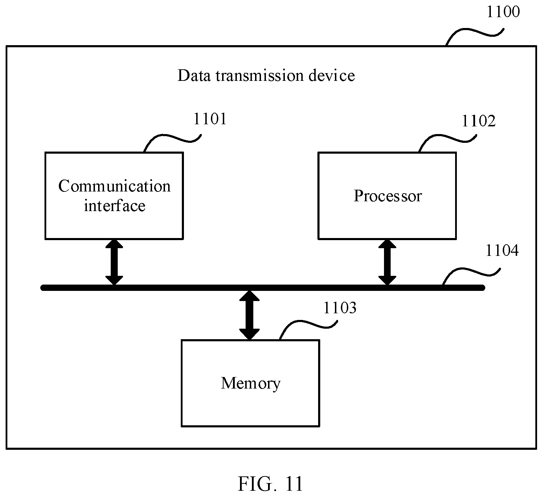

Refer to FIG. 11. FIG. 11 is a schematic diagram of a structure of a data transmission device 1100 according to an example embodiment of this application. The data transmission device 1100 is a transmit side/receive side device. The data transmission device 1100 shown in FIG. 11 is configured to perform operations related to the data transmission method shown in FIG. 2. The data transmission device 1100 is, for example, a network device such as a switch or a router, and another device (for example, a server or a PC) that includes a chip concatenation mode. A hardware structure of the data transmission device 1100 includes a communication interface 1101 and a processor 1102. Optionally, the communication interface 1101 and the processor 1102 are connected through a bus 1104. The communication interface 1101 is configured to obtain first data and transmit second data. The processor may store instructions or program code, and execute, by invoking the instructions or the program code, a function performed by a first chip or a function performed by a third chip. Optionally, the network device further includes a memory 1103. The memory 1103 stores instructions or program code. The processor 1102 is configured to invoke the instructions or program code in the memory 1103, so that the network device performs related processing steps of the first chip in the foregoing method embodiment. In a specific embodiment, the data transmission device 1100 in this embodiment of this application may include the first chips in the foregoing method embodiments. The processor 1102 in the data transmission device 1100 reads the instructions or program code in the memory 1103, so that the data transmission device 1100 shown in FIG. 11 can perform all or some operations performed by the first chip.

In a specific embodiment, the data transmission device 1100 in this embodiment of this application includes the third chips in the foregoing method embodiments. The processor 1102 in the data transmission device 1100 reads the instructions or program code in the memory 1103, so that the data transmission device 1100 shown in FIG. 11 can perform all or some operations performed by the third chip.

For example, the processor 1102 is, for example, a general-purpose central processing unit (central processing unit, CPU), a digital signal processor (digital signal processor, DSP), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 1102 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor may implement or execute various logical blocks, modules, and circuits described with reference to content disclosed in embodiments of the present invention. Alternatively, the processor may be a combination of processors implementing a computing function, for example, including a combination of one or more microprocessors, or a combination of a DSP and a microprocessor.

Optionally, the data transmission device 1100 further includes a bus. The bus is configured to transfer information between components of the data transmission device 1100. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of representation, only one bold line is used to represent the bus in FIG. 11, but this does not mean that there is only one bus or only one type of bus. In addition to being connected through a bus, the components of the data transmission device 1100 in FIG. 11 may be connected in another manner. A connection manner of the components is not limited in this embodiment of the present invention.

For example, the memory 1103 is a read-only memory (read-only memory, ROM) or another type of static storage device capable of storing static information and instructions, or a random access memory (random access memory, RAM) or another type of dynamic storage device capable of storing information and instructions, or is an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium capable of carrying or storing expected program code in an instruction form or a data structure form and capable of being accessed by a computer. However, the memory is not limited thereto. For example, the memory 1103 exists independently, and is connected to the processor 1102 through the bus. Alternatively, the memory 1103 may be integrated into the processor 1102.

The communication interface 1101 is any transceiver-type apparatus, and is configured to communicate with another device or a communication network. The communication network may be the Ethernet, a radio access network (RAN), a wireless local area network (wireless local area network, WLAN), or the like. The communication interface 1101 may include a wired communication interface, and may further include a wireless communication interface. Specifically, the communication interface 1101 may be an Ethernet (Ethernet) interface, a fast Ethernet (fast Ethernet, FE) interface, a gigabit Ethernet (gigabit Ethernet, GE) interface, an asynchronous transfer mode (asynchronous transfer mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 1101 may be used by the data transmission device 1100 to communicate with another device.

In a specific implementation, in an embodiment, the processor 1102 may include one or more CPUs. Each of the processors may be a single-core (single-CPU) processor, or may be a multi-core (multi-CPU) processor. The processor herein may be one or more devices, circuits, and/or processing cores configured to process data (for example, computer program instructions).

In a specific implementation, in an embodiment, the data transmission device 1100 may include a plurality of processors. Each of the processors may be a single-core processor (single-CPU) or a multi-core processor (multi-CPU). The processor herein may be one or more devices, circuits, and/or processing cores configured to process data (for example, computer program instructions). In a specific implementation, in an embodiment, the data transmission device 1100 may alternatively include an output device and an input device. The output device communicates with the processor 1102, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, or a projector (projector). The input device communicates with the processor 1102, and may receive an input by a user in a plurality of manners. For example, the input device may be a mouse, a keyboard, a touchscreen device, or a sensing device.

In some embodiments, the memory 1103 is configured to store program code for performing the solutions of this application, and the processor 1102 may execute the program code stored in the memory 1103. In other words, the data transmission device 1100 may implement the data transmission method provided in the method embodiment by using the processor 1102 and the program code in the memory 1103. The program code may include one or more software modules. Optionally, the processor 1102 may store program code or instructions for performing the solutions of this application.

In a specific embodiment, the data transmission device 1100 in this embodiment of this application may include the first chip in the foregoing method embodiments. The processor 1102 in the data transmission device 1100 reads the program code in the memory 1103 or the program code or instructions stored in the processor 1102, so that the data transmission device 1100 shown in FIG. 11 can perform all or some operations performed by the first chip.

In a specific embodiment, the data transmission device 1100 in this embodiment of this application includes the third chip in the foregoing method embodiments. The processor 1102 in the data transmission device 1100 reads the program code in the memory 1103 or the program code or instructions stored in the processor 1102, so that the data transmission device 1100 shown in FIG. 11 can perform all or some operations performed by the third chip.

The data transmission device 1100 may be further corresponding to the apparatuses shown in FIG. 9 and FIG. 10. Each functional module in the apparatuses shown in FIG. 9 and FIG. 10 is implemented by using software of the data transmission device 1100. In other words, the functional modules included in the apparatuses shown in FIG. 9 and FIG. 10 are generated after the processor 1102 of the data transmission device 1100 reads the program code stored in the memory 1103. The steps of the data transmission method shown in FIG. 2 are completed by using an integrated logic circuit of hardware in the processor of the data transmission device 1100 or an instruction in a form of software. The steps of the method disclosed with reference to embodiments of this application may be directly performed by a hardware processor, or may be performed by using a combination of hardware in the processor and a software module. The software module may be located in a mature storage medium in this field, such as a random access memory, a flash memory, a read-only memory, a programmable read-only memory, an electrically erasable programmable memory, or a register. The storage medium is located in the memory, and the processor reads information in the memory and performs the steps in the foregoing method in combination with the hardware in the processor. To avoid repetition, details are not described herein again.

An embodiment of this application further provides a data transmission system. The system includes a first data transmission device and a second data transmission device. The first data transmission device is configured to perform the method performed by the first chip shown in FIG. 2, and the second data transmission device is configured to perform the method performed by the third chip shown in FIG. 2.

For functions of the first data transmission device and the second data transmission device in the system, refer to related descriptions shown in FIG. 2. Details are not described herein again.

It should be understood that the processor may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor or any conventional processor. It is to be noted that the processor may be a processor that supports an advanced reduced instruction set computing machine (advanced RISC machine, ARM) architecture.

Further, in an optional embodiment, the memory may include a read-only memory and a random access memory, and provide instructions and data for the processor. The memory may further include a nonvolatile random access memory. For example, the memory may further store information of a device type.

The memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). A computer-readable storage medium is further provided. The storage medium stores at least one program instruction or code, and when the program instruction or code is loaded and executed by a processor, a computer is enabled to implement the data transmission method shown in FIG. 2. This application provides a computer program. When the computer program is executed by a computer, a processor or the computer is enabled to perform corresponding steps and/or procedures in the foregoing method embodiments.

A chip is provided. The chip includes a processor, configured to: invoke, from a memory, instructions stored in the memory and run the instructions, so that a device on which the chip is installed performs the methods in the foregoing aspects.

Another chip is provided. The chip includes: an input interface, an output interface, a processor, and a memory.

The input interface, the output interface, the processor, and the memory are connected to each other by using an internal connection path. The processor is configured to execute code in the memory. When the code is executed, the processor is configured to perform the methods in the foregoing aspects.

A device is provided, and includes the chip in any one of the foregoing solutions.

A device is provided, and includes the first chip in any one of the foregoing solutions and/or the third chip in any one of the foregoing solutions.

In some embodiments, in FIG. 1 to FIG. 8, the second chip may be a transmit side device, for example, a physical layer (PHY) chip in a router, a switch, or a server, and the first chip may be an interface of the transmit side device, for example, a chip in an optical module or a CDR/retimer chip. The third chip may be an interface of a receive side device, for example, a chip in an optical module or a CDR/retimer chip, and the fourth chip may be a physical layer (PHY) chip in the receive side device. The PHY chip may be a chip located on a board of a computing device, and the chip may be a CPU, a network processor (network processor, NP), a neural network processing unit (neural network processing unit, NPU), a field programmable gate array (field programmable gate array, FPGA), a programmable logic controller (programmable logic controller, PLC), or the like, or any combination thereof.

In some embodiments, the first chip communicates with the second chip by using an AUI. In some embodiments, the third chip communicates with the fourth chip by using an AUI.

In the foregoing embodiment, during soft decoding, first, calculating confidence (also referred to as reliability, reliability) of each bit in a received codeword based on received quantized soft-decision information, to obtain a confidence sequence; selecting M least reliable bit locations from the confidence sequence, and in the M least reliable bit locations, and successively attempting to perform bitwise inversion on all combinations of 0, 1, 2, ..., and N (N ≤ M) bit locations to obtain a plurality of test codewords; and performing hard-decision decoding error correction on each test codeword; then calculating Euclidean distances between the confidence sequence and all corrected test codewords; and selecting a corrected test codeword corresponding to a smallest distance as a final corrected codeword output. If there is no correctable codeword in the test codewords, a hard-decision result corresponding to the original received codeword is used as an output codeword. All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, solid-state drive), or the like.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

A person of ordinary skill in the art may be aware that, with reference to the embodiments disclosed in this specification, the method steps and the modules can be implemented by using software, hardware, firmware, or any combination thereof. To clearly describe the interchangeability between the hardware and the software, the steps and composition of each embodiment have generally described above based on functions. Whether these functions are performed in a hardware or software manner depends on particular applications and design constraints of the technical solutions. A person of ordinary skill in the art may use different methods to implement the described functions for each particular application, but it should not be considered that the implementation goes beyond the scope of this application.

A person of ordinary skill in the art may understand that all or some of the steps of embodiments may be implemented by hardware or a program instructing related hardware. The program may be stored in a computer-readable storage medium. The storage medium may include: a read-only memory, a magnetic disk, or an optical disc.

When software is used to implement the embodiments, all or a part of the embodiments may be implemented in a form of a computer program product. The computer program product includes one or more computer program instructions. For example, the method in embodiments of this application may be described in a context of a machine-executable instruction. The machine-executable instruction is included in, for example, a program module executed in a device on a real or virtual processor of a target. Usually, the program module includes a routine, a program, a library, an object, a class, a component, a data structure, and the like, and executes a specific task or implements a specific abstract data structure. In various embodiments, functions of program modules may be combined or split between the described program modules. The machine-executable instruction for the program module may be executed locally or within a distributed device. In the distributed device, the program module may be located in both a local storage medium and a remote storage medium.

Computer program code used to implement the method in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed all on a computer, partially on a computer, as an independent software package, partially on a computer and partially on a remote computer, or all on a remote computer or server.

In a context of embodiments of this application, the computer program code or related data may be carried by any appropriate carrier, so that a device, an apparatus, or a processor can perform various processing and operations described above. For example, the carrier includes a signal, a computer-readable medium, and the like.

For example, the signal may include propagating signals in electrical, optical, radio, sound, or other forms, such as carrier waves and infrared signals.

The machine-readable medium may be any tangible medium that includes or stores a program used for or related to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. More detailed examples of the machine-readable storage medium include an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

It may be clearly understood by a person skilled in the art that, for convenient and brief description, for a detailed working process of the foregoing system, device, and module, refer to a corresponding process in the foregoing method embodiments. Details are not described herein. In the several embodiments provided in this application, it should be understood that the disclosed system, device, and method may be implemented in other manners. For example, the described device embodiment is merely an example. For example, the module division is merely logical function division and may be other division during actual implementation. For example, a plurality of modules or components may be combined or integrated into another system, or some features may be omitted or not performed. In addition, the displayed or discussed mutual couplings or direct couplings or communication connections may be implemented through some interfaces, and the indirect couplings or communication connections between the devices or modules may be electrical connections, mechanical connections, or connections in other forms.

The modules described as separate parts may or may not be physically separate, and parts displayed as modules may or may not be physical modules, may be located in one position, or may be distributed on a plurality of network modules. Some or all of the modules may be selected based on actual requirements to achieve the objectives of the solutions in embodiments of this application. In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated module may be stored in a computer-readable storage medium. Based on such an understanding, the technical solutions of this application essentially, or the part contributing to the related art, or all or some of the technical solutions may be implemented in the form of a software product. The computer software product is stored in a storage medium and includes several instructions to cause a computer device (which may be a personal computer, a server, a network device, or the like) to perform all or some of the steps of the method in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In this application, the terms "first", "second", and the like are used to distinguish between same or similar items whose effects and functions are basically the same. It should be understood that there is no logical or time-sequence dependency among "first", "second", and "n$^{th}$", and a quantity and an execution sequence are not limited. It should also be understood that although the terms such as "first" and "second" are used in the following description to describe various elements, these elements should not be limited by the terms. These terms are merely used to distinguish one element from another element. For example, without departing from the scope of various examples, a first network device may be referred to as a second network device. Similarly, a second network device may be referred to as a first network device. Both the first network device and the second network device may be network devices, and in some cases, may be separate and different network devices.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and the term "a plurality of" means two or more. For example, a plurality of second packets mean two or more second packets. The terms "system" and "network" may be used interchangeably in this specification.

It should be understood that the terms used in the descriptions of various examples in this specification are merely intended to describe specific examples, but are not intended to constitute a limitation. The terms "one" ("a" and "an") and "the" of singular forms used in the descriptions of various examples and the appended claims are also intended to include plural forms, unless otherwise specified in the context clearly.

It should be further understood that the term "include" (or "includes", "including", "comprises", and/or "comprising"), when being used in this specification, specifies the presence of stated features, integers, steps, operations, elements, and/or components, but does not preclude the presence or addition of one or more other features, integers, steps, operations, elements, components, and/or groups thereof.

It should be further understood that the term "if" may be interpreted as a meaning "when" ("when" or "upon"), "in response to determining", or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)". It should be understood that determining B based on A does not mean that B is determined only based on A, but B may be determined based on A and/or other information.

It should further be understood that "one embodiment", "an embodiment", or "a possible implementation" mentioned throughout this specification means that particular features, structures, or characteristics related to the embodiments or implementations are included in at least one embodiment of this application. Therefore, "in one embodiment", "in an embodiment", or "in a possible implementation" appearing throughout this specification does not necessarily mean a same embodiment. In addition, these particular features, structures, or characteristics may be combined in one or more embodiments by using any appropriate manner.

## Claims

1. A data transmission method, wherein the method comprises:

   obtaining, by a first chip, first data, wherein the first data is data obtained through coding by using a first forward error correction FEC code type;
   determining a second FEC code type based on a reference clock frequency of the first chip and an output rate corresponding to the first FEC code type;
   coding, by the first chip, the first data based on the second FEC code type, to obtain second data; and
   transmitting, by the first chip, the second data.

2. The method according to claim 1, wherein the reference clock frequency of the first chip, the output rate corresponding to the first FEC code type, a codeword length of the second data, and an information length in a codeword of the second data meet an overhead proportional relationship; and
   the determining a second FEC code type based on a reference clock frequency of the first chip and an output rate corresponding to the first FEC code type comprises:
   determining the second FEC code type based on the reference clock frequency of the first chip, the output rate corresponding to the first FEC code type, and the overhead proportional relationship.

3. The method according to claim 2, wherein the overhead proportional relationship comprises:

$$\frac{n}{k} \times v_1 = p \times f,$$

   wherein
   n is the codeword length of the second data, k is the information length in the codeword of the second data, vi is the output rate corresponding to the first FEC code type, p is an adjustment parameter, f is the reference clock frequency of the first chip, and p is a positive integer.

4. The method according to any one of claims 1 to 3, wherein the codeword length of the second data is in an integer multiple relationship with a quantity of logical channels through which the second data is distributed.

5. The method according to any one of claims 1 to 4, wherein the coding, by the first chip, the first data based on the second FEC code type, to obtain second data comprises:

distributing, by the first chip, the first data to obtain a plurality of pieces of first subdata, and separately coding, by the first chip, the plurality of pieces of first subdata based on the second FEC code type to obtain a plurality of pieces of second subdata; and
the transmitting, by the first chip, the second data comprises:
transmitting, by the first chip, the plurality of pieces of second subdata.

6. The method according to claim 5, wherein the distributing, by the first chip, the first data to obtain a plurality of pieces of first subdata comprises:

distributing, by the first chip, the first data through a physical coding sublayer PCS channel to obtain the plurality of pieces of first subdata; or
distributing, by the first chip, the first data stream through a physical medium attachment sublayer PMAto obtain the plurality of pieces of first subdata.

7. The method according to any one of claims 1 to 4, wherein the transmitting, by the first chip, the second data comprises:
distributing, by the first chip, the second data to obtain a plurality of pieces of third subdata, and sending the plurality of pieces of third subdata through a plurality of logical channels.

8. The method according to any one of claims 1 to 7, wherein before the determining a second FEC code type based on a reference clock frequency of the first chip and an output rate corresponding to the first FEC code type, the method further comprises:

performing, by the first chip, auto-negotiation with a third chip that receives data sent by the first chip; and
in response to an auto-negotiation result indicating that concatenated coding is required, performing, by the first chip, the step of determining a second FEC code type based on a reference clock frequency of the first chip and an output rate corresponding to the first FEC code type.

9. The method according to any one of claims 1 to 8, wherein the first data is data inside the first chip, or the first data is data that is received by the first chip and that is sent by a second chip.

10. A data transmission method, wherein the method comprises:

receiving, by a third chip, second data, wherein the second data is data obtained by coding first data by using a second forward error correction FEC code type, and the first data is data obtained through coding by using a first FEC code type; and
decoding, by the third chip, the second data based on the second FEC code type, to obtain decoded data.

11. The method according to claim 10, wherein the decoding, by the third chip, the second data based on the second FEC code type comprises:
performing, by the third chip, soft-decision decoding on the second data based on the second FEC code type.

12. The method according to claim 11, wherein the performing, by the third chip, soft-decision decoding on the second data based on the second FEC code type comprises: calculating confidence of each bit in a received codeword based on received quantized soft-decision information, to obtain a confidence sequence; selecting M least reliable bit locations from the confidence sequence, and in the M least reliable bit locations, and successively attempting to perform bitwise inversion on all combinations of 0, 1, 2, ..., and N ($N \leq M$) bit locations to obtain a plurality of test codewords; performing hard-decision decoding error correction on each test codeword; calculating Euclidean distances between the confidence sequence and all corrected test codewords; and selecting a corrected test codeword corresponding to a smallest distance as a final corrected codeword output.

**13.** The method according to claim 12, wherein the performing, by the third chip, soft-decision decoding on the second data based on the second FEC code type further comprises: if there is no correctable codeword in the test codewords, using a hard-decision result corresponding to the original received codeword as an output codeword.

**14.** The method according to any one of claims 10 to 13, wherein after the decoding, by the third chip, the second data based on the second FEC code type, to obtain decoded data, the method further comprises:
re-coding, by the third chip, the decoded data based on a third FEC code type, and transmitting the re-coded data.

**15.** The method according to claim 14, wherein the third FEC code type is the second FEC code type.

**16.** A data transmission apparatus, wherein the apparatus comprises:

an obtaining module, configured to obtain first data, wherein the first data is data obtained through coding by using a first forward error correction FEC code type;
a determining module, configured to determine a second FEC code type based on a reference clock frequency of a first chip and an output rate corresponding to the first FEC code type;
a coding module, configured to code the first data based on the second FEC code type, to obtain second data; and
a transmission module, configured to transmit the second data.

**17.** The apparatus according to claim 16, wherein the reference clock frequency of the first chip, the output rate corresponding to the first FEC code type, a codeword length of the second data, and an information length in a codeword of the second data meet an overhead proportional relationship; and
the determining module is configured to determine the second FEC code type based on the reference clock frequency of the first chip, the output rate corresponding to the first FEC code type, and the overhead proportional relationship.

**18.** The apparatus according to claim 17, wherein the overhead proportional relationship comprises:

$$\frac{n}{k} \times v_1 = p \times f,$$

wherein
n is the codeword length of the second data, k is the information length in the codeword of the second data, vi is the output rate corresponding to the first FEC code type, p is an adjustment parameter, f is the reference clock frequency of the first chip, and p is a positive integer.

**19.** The apparatus according to any one of claims 16 to 18, wherein the codeword length of the second data is in an integer multiple relationship with a quantity of logical channels through which the second data is distributed.

**20.** The apparatus according to any one of claims 16 to 19, wherein the coding module is configured to: distribute the first data to obtain a plurality of pieces of first subdata, and separately code the plurality of pieces of first subdata based on the second FEC code type to obtain a plurality of pieces of second subdata; and
the transmission module is configured to transmit the plurality of pieces of second subdata.

**21.** The apparatus according to claim 20, wherein the coding module is configured to distribute the first data through a physical coding sublayer PCS channel to obtain the plurality of pieces of first subdata; or distribute the first data stream through a physical medium attachment sublayer PMAto obtain the plurality of pieces of first subdata.

**22.** The apparatus according to any one of claims 16 to 19, wherein the transmission module is configured to: distribute the second data to obtain a plurality of pieces of third subdata, and send the plurality of pieces of third subdata through a plurality of logical channels.

**23.** The apparatus according to any one of claims 16 to 22, further comprising:
an auto-negotiation module, configured to perform auto-negotiation with a third chip that receives data sent by the first chip, wherein in response to an auto-negotiation result indicating that concatenated coding is required, the determining module determines the second FEC code type based on the reference clock frequency of the first chip and the output rate corresponding to the first FEC code type.

**24.** The apparatus according to any one of claims 16 to 23, wherein the first data is data inside the first chip, or the first data is data that is received by the first chip and that is sent by a second chip.

25. A data transmission apparatus, wherein the apparatus comprises:

a receiving module, configured to receive second data, wherein the second data is data obtained by coding first data by using a second forward error correction FEC code type, and the first data is data obtained through coding by using a first FEC code type; and
a decoding module, configured to decode the second data based on the second FEC code type, to obtain decoded data.

26. The apparatus according to claim 25, wherein the decoding module is configured to perform soft-decision decoding on the second data based on the second FEC code type, to obtain the decoded data.

27. The apparatus according to claim 26, wherein the decoding module is configured to: calculate confidence of each bit in a received codeword based on received quantized soft-decision information, to obtain a confidence sequence; select M least reliable bit locations from the confidence sequence, and in the M least reliable bit locations, and successively attempt to perform bitwise inversion on all combinations of 0, 1, 2, ..., and N ($N \leq M$) bit locations to obtain a plurality of test codewords; perform hard-decision decoding error correction on each test codeword; calculate Euclidean distances between the confidence sequence and all corrected test codewords; and select a corrected test codeword corresponding to a smallest distance as a final corrected codeword output.

28. The apparatus according to claim 27, wherein the decoding module is further configured to: if there is no correctable codeword in the test codewords, use a hard-decision result corresponding to the original received codeword as an output codeword.

29. The apparatus according to any one of claims 25 to 28, wherein the apparatus further comprises:

a coding module, configured to re-code the decoded data based on a third FEC code type; and
a transmission module, configured to transmit the re-coded data.

30. The apparatus according to claim 29, wherein the third FEC code type is the second FEC code type.

31. A data transmission device, wherein the data transmission device comprises a processor, the processor is coupled to a memory, the memory stores at least one program instruction or code, and the at least one program instruction or code is loaded and executed by the processor, so that the data transmission device implements the method according to any one of claims 1 to 15.

32. A data transmission system, wherein the data transmission system comprises a first data transmission device and a second data transmission device, and the first data transmission device is configured to perform the method according to any one of claims 1 to 9, and/or the second data transmission device is configured to perform the method according to any one of claims 10 to 15.

33. A computer-readable storage medium, comprising at least one program instruction or code, wherein the program instruction or code is loaded and executed by a processor, so that a computer implements the method according to any one of claims 1 to 15.

34. A computer program product, comprising at least one program instruction or code, wherein the program instruction or code is loaded and executed by a processor, so that a computer implements the method according to any one of claims 1 to 15.

| 102 | 101 | 103 |
|-----|-----|-----|
| Second chip | First chip | Third chip |

FIG. 1

First chip

Third chip

201: Obtain first data, where the first data is data obtained through coding by using a first FEC code type

202: Determine a second FEC code type based on a reference clock frequency of the first chip and an output rate corresponding to the first FEC code type

203: Code the first data based on the second FEC code type, to obtain second data

204: Transmit the second data

205: Receive the second data, where the second data is data obtained by coding the first data by using the second FEC code type, and the first data is data obtained through coding by using the first FEC code type

206: Decode the second data based on the second FEC code type, to obtain decoded data

FIG. 2

Second chip

First chip

A plurality of pieces of first data

A plurality of pieces of second data

Third data

PMA

AUI

PMA

Second FEC code type–based coding

Physical channel 1

Second FEC code type–based coding

Physical channel 2

⋮

Second FEC code type–based coding

Physical channel N

PMA

PMD

FIG. 3

First data | A plurality of pieces of first subdata | A plurality of pieces of second subdata

Distribution

Second FEC code type–based coding

Second FEC code type–based coding

⋮

Second FEC code type–based coding

FIG. 4

EP 4 274 127 A1

FIG. 5

EP 4 274 127 A1

FIG. 6

EP 4 274 127 A1

Second chip

First chip

A plurality of pieces of second subdata

First data → PMA — AUI — PMA

Second FEC code type–based coding → Distribution → PCS channel 1 / PCS channel 2 / ... / PCS channel N

Second FEC code type–based coding → Distribution → PCS channel 1 / PCS channel 2 / ... / PCS channel N

Second FEC code type–based coding → Distribution → PCS channel 1 / PCS channel 2 / ... / PCS channel N

FIG. 7

102         101         103         104

| Second chip | — | First chip | — | Third chip | — | Fourth chip |

FIG. 8

Data transmission apparatus

| Obtaining module | 901 |
| Determining module | 902 |
| Coding module | 903 |
| Transmission module | 904 |

FIG. 9

Data transmission apparatus

| Receiving module | 1001 |
| Decoding module | 1002 |

FIG. 10

1100

Data transmission device

1101

Communication interface

1102

Processor

1104

1103

Memory

FIG. 11

## INTERNATIONAL SEARCH REPORT

| International application No. |
|---|
| **PCT/CN2022/073180** |

| A. | CLASSIFICATION OF SUBJECT MATTER |
|---|---|

H04L 1/00(2006.01)i

According to International Patent Classification (IPC) or to both national classification and IPC

| B. | FIELDS SEARCHED |
|---|---|

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT, CNKI, WPI, EPODOC: 前向纠错编码 FEC 时钟 频率 速率 速度 码字 长度 开销 码型 第一 第二 clock frequency rate code word length cost format type first second

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2020228126 A1 (HUAWEI TECHNOLOGIES CO., LTD.) 19 November 2020 (2020-11-19) <br> description page 12 paragraph 2 - page 21 paragraph 6 | 10-15, 25-34 |
| A | CN 106688201 A (MITSUBISHI ELECTRIC CORPORATION) 17 May 2017 (2017-05-17) <br> entire document | 1-34 |
| A | CN 104115435 A (TYCO ELECTRONICS SUBSEA COMMUNICATIONS, LLC) 22 October 2014 (2014-10-22) <br> entire document | 1-34 |
| A | US 2015162937 A1 (NEC LABORATORIES AMERICA, INC.) 11 June 2015 (2015-06-11) <br> entire document | 1-34 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 March 2022** | **31 March 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/073180**

| Patent document cited in search report | | | Publication date (day/month/year) | Patent family member(s) | | | Publication date (day/month/year) |
|---|---|---|---|---|---|---|---|
| WO | 2020228126 | A1 | 19 November 2020 | WO | 2020227976 | A1 | 19 November 2020 |
| | | | | BR | 112021022883 | A2 | 04 January 2022 |
| | | | | EP | 3958485 | A1 | 23 February 2022 |
| CN | 106688201 | A | 17 May 2017 | JP | 2017529000 | A | 28 September 2017 |
| | | | | WO | 2016043339 | A1 | 24 March 2016 |
| | | | | EP | 3195510 | A1 | 26 July 2017 |
| | | | | US | 2016080087 | A1 | 17 March 2016 |
| CN | 104115435 | A | 22 October 2014 | US | 2013216221 | A1 | 22 August 2013 |
| | | | | EP | 2817908 | A1 | 31 December 2014 |
| | | | | WO | 2013126196 | A1 | 29 August 2013 |
| | | | | JP | 2015508968 | A | 23 March 2015 |
| US | 2015162937 | A1 | 11 June 2015 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110099748

- CN 202110185631